Europäisches Patentamt

(19) European Patent Office

Office européen des brevets

(11) Publication number: **0 007 733**
**B1**

(12) **EUROPEAN PATENT SPECIFICATION**

(45) Date of publication of patent specification: **01.09.82**

(21) Application number: **79301337.6**

(22) Date of filing: **09.07.79**

(51) Int. Cl.³: **G 01 N 33/18,**
**G 01 N 27/46**

(54) Method and apparatus for use in ion-selective electrode measurements.

(30) Priority: **13.07.78 GB 2981078**

(43) Date of publication of application:
**06.02.80 Bulletin 80/3**

(45) Publication of the grant of the patent:
**01.09.82 Bulletin 82/35**

(84) Designated Contracting States:
**CH DE FR GB IT NL**

(56) References cited:
**DE - A - 2 104 969**
**DE - A - 2 132 166**
**US - A - 3 840 438**
**US - A - 3 897 213**
**US - A - 3 904 365**

(73) Proprietor: **BROWN BOVERI KENT LIMITED**
**Biscot Road**
**Luton LU3 1AL (GB)**

(72) Inventor: **Bottom, Alan Edward**
**174 Buckingham Road**
**Hampton Middlesex (GB)**

(74) Representative: **McCulloch, Norman Little et al,**
**Mathys & Squire 10 Fleet Street**
**London EC4Y 1AY (GB)**

Courier Press, Leamington Spa, England.

Method and apparatus for use in ion-selective electrode measurements

This invention relates to ion-selective electrode measurements and is particularly applicable to the continuous monitoring of pH levels of, for example, boiler feed water.

Apparatus for this purpose has hitherto typically comprised a flow cell through which a sample of the boiler feed water is directed, the flow cell having mounted therein a pH sensor consisting, for example, of a glass electrode and a reference electrode. At periodic intervals it is necessary to standardize the apparatus with the use of a reference solution of known pH, and in many systems this involves removing the electrodes from the flow cell and placing them in the vessel containing reference solution. This practice is clearly time-consuming, but it also introduces significant errors since a standardization is carried out in an environment which differs considerably, particularly in temperature, from that obtaining in the flow cell during pH measurement.

The problem of achieving reliable yet rapid standardization has been partially overcome in one proposal which provides an inlet in the apparatus for pouring reference solution directly into the flow cell. This procedure has the advantage that the electrodes are not removed from the flow cell, but there remains the risk that as a result of temperature differences between the reference solution and sample water, the apparatus may be incorrectly standardized. In addition, it is necessary with this procedure for the flow cell to be thoroughly rinsed with distilled water after it has been drained of sample water and before it is filled with reference solution; this is a time consuming exercise. A further disadvantage is that whilst pH measurements are taken with the sample water flowing through the flow cell, standardization is carried out with reference solution which has been poured into the flow cell and is not flowing through the cell. This is a further possible source of error.

It is an object of this invention to provide apparatus for the ion-selective electrode measurement of sample liquid, which may be standardized simply and quickly and in which the errors of standardization due to variations in temperature are significantly reduced if not removed. It is a further object of the invention to provide an improved method of ion-selective electrode measurement including such an improved standardization technique.

Accordingly, the present invention consists, in one aspect, in apparatus for the ion-selective electrode measurement of the concentration of a species of ion in a flowing sample liquid, comprising a flow cell having an ion-selective electrode assembly mounted so as to be in electrochemical contact with sample liquid flowing through the cell and a reference solution reservoir, characterised by means including a heat exchanger connecting the reservoir with the flow cell and sample conduit means provided with a flow selector whereby sample liquid may be directed in a measuring mode through the flow cell and in a standardization mode through the heat exchanger, the passing of reference solution through the heat exchanger in the standardization mode thereby serving to equilibrate sample liquid and reference solution temperatures.

In one form of the invention, the ion-selective electrode assembly comprises a pH electrode and a reference electrode.

In another aspect, this invention consists in a method of monitoring the concentration of a species of ion in a flowing sample liquid by passing the sample liquid through a flow cell having an ion-selective electrode assembly in electrochemical contact with the sample liquid, characterized in that the electrode assembly is standardized by diverting sample liquid from the cell into heat exchanging relationship with an appropriate reference solution to equilibrate sample liquid and reference solution temperatures, and then passing the temperature-equilibrated reference solution through said flow cell for standardization of the electrode assembly.

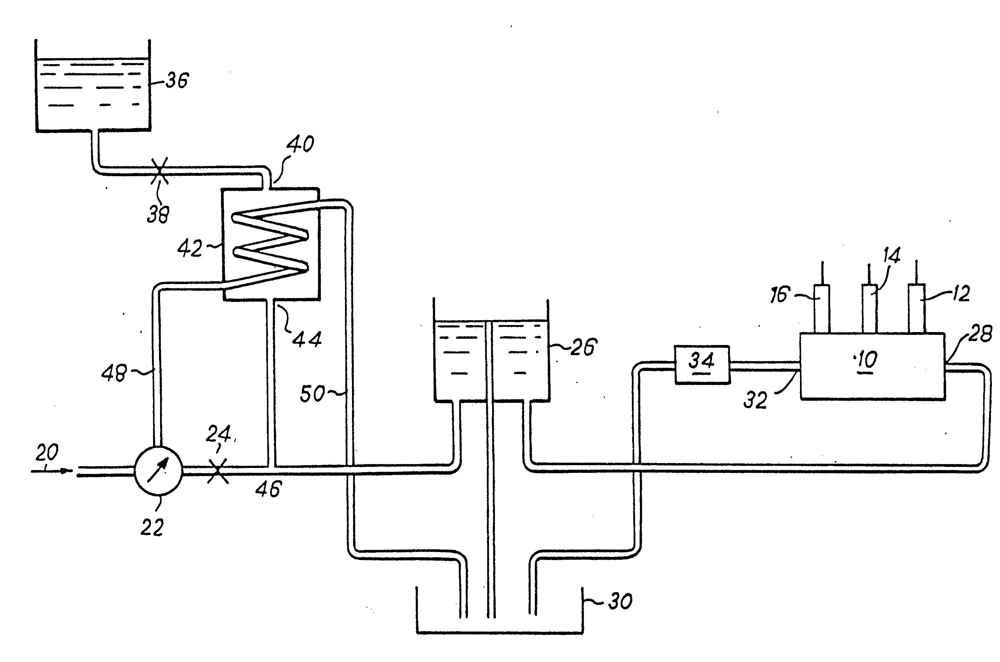

The present invention will now be described by way of example with reference to the accompanying drawing which show apparatus according to the invention in diagrammatic form.

The apparatus comprises a flow cell 10 having a glass pH electrode 12, a reference electrode 14 and a temperature sensor 16 mounted therein. The electrodes and the sensor are electrically connected in known manner with a conventional pH meter. The presence of temperature sensor 16 enables the pH measurement to be temperature compensated in known manner.

The flow of sample water through the apparatus proceeds, in the pH measuring mode, from a sample water inlet 20, through selector valve 22 and flow control valve 24 to a constant-head unit 26. From this unit, the flow is directed to inlet 28 of the flow cell 10 with excess water from the constant-head unit passing to the drain 30. The outlet 32 of the flow cell is connected to a thermometer 34 and thus to the drain 30.

A reservoir 36 is charged with buffer solution and a control valve 38 at the base of the reservoir communicates with an inlet 40 of a heat exchanger 42, the outlet 44 of this heat exchanger being joined with the sample water conduit at T-piece 46. The second outlet port of selector valve 22 is connected to one end of the coil of the heat exchanger 42 through pipe 48, the other end of the coil communicating via pipe 50 with the drain 30.

In the normal pH measuring mode, the selector valve 22 is positioned to direct sample flow to the control valve 24 and thus to the constant-head unit 26. The buffer reservoir control valve 38 is closed. Sample water passes continuously through the flow cell 10 and past thermometer 34 to the drain 30. When it is required to standardize the apparatus, the selector valve 22 is turned to direct sample flow through the coil of heat exchanger 42, and buffer control valve 38 is opened. Buffer solution passes through the heat exchanger and there rapidly assumes the temperature of the sample water.

In one example, the described apparatus is used to measure the pH of ammoniated boiler feed water with a pH range of approximately 8.8 to 9.3. The sample water is taken as a condensate and can vary in temperature from 10°C to 40°C. The temperature coefficient in pH units is approximately −0.035/°C and a pH measurement is required corrected to 25°C. The correction from pH at sample temperature to pH at 25°C can be achieved using a variable isopotential control, if this is available on the pH meter; otherwise a variety of other methods can be employed. The buffer solution used is 0.01M borax having a pH at 25°C of approximately 9.18 and a temperature coefficient in pH units of −0.008/°C. The temperature of the buffer solution will of course depend on the conditions under which it has been prepared and stored but may for example be taken as lying in the range 18°C to 25°C.

The apparatus is arranged to bring the buffer solution (18°C to 25°C) to the temperature of the sample solution (10°C to 40°C) with an accuracy of ±1°C, and the dimensions of the heat exchanger are chosen to that end, taking into account the available sample flow rate. Typically, the flow of sample water through the heat exchanger required in the standardization mode will be greater than the flow of sample water required through the flow cell in the measuring mode. The flow rate at input 20 is accordingly chosen to give the the required flow through the heat exchanger — say 300 cc/minute — and the flow control valve 24 is set to reduce this to 15—100 cc/minute when the flow selector 22 is in the measuring mode position.

Since the pH meter will be adjusted to correct for the temperature coefficient of pH of ammoniated water, the actual temperature of the borax solution in the standardization mode (this being equal of course to the temperature of the sample water) is required to be known. The thermometer 34 is used for this purpose although a sufficiently sophisticated pH meter could of course derive and display the temperature from the output of temperature sensor 16.

It will be appreciated that during standardization, the buffer or reference solution flows through the flow cell in a manner identical to the flow of sample water and, in particular, at the same temperature. Accurate standardization can therefore be carried out. Furthermore, the operation of standardization involves only the actuation of selector valve 22 and control valve 38 and the allowance of sufficient time for a flow of buffer solution at the correct temperature to be established through the flow cell. With suitable design of the heat exchanger this period can be made conveniently shorter.

It should be understood that this invention has been described by way of example only and numerous modifications are possible without departing from the scope of the invention. Thus, for example, any suitable form of heat exchanger could be employed whilst items such as the constant-head unit and control valve 24, whilst preferably included, are not essential.

Although the primary uses of this invention probably lie in the field of pH measurement of boiler feed water or other sample liquids, the invention is not restricted to this application and extends to other forms of ion-selective electrode measurements such as chloride ion measurements in dosed water or in process liquids. The same advantages are obtained of easier and more rapid standardization procedures coupled with the greater degree of accuracy which follows from the fact that the flow cell environment during standardization more closely approaches that during measurement.

## Claims

1. Apparatus for the ion-selective electrode measurement of the concentration of a species of ion in a flowing sample liquid, comprising a flow cell (10) having an ion-selective electrode assembly (12, 14) mounted so as to be in electrochemical contact with sample liquid flowing through the cell and a reference reservoir (36), characterised by means including a heat exchanger (42) connecting the reservoir (36) with the flow cell (10) and sample conduit means (20, 48) provided with a flow selector (22) whereby sample liquid may be directed in a measuring mode through the flow cell (10) and in a standardization mode through the heat exchanger (42), the passage of reference solution through the heat exchanger in the standardization mode thereby serving to equilibrate sample liquid and reference solution temperatures.

2. Apparatus according to Claim 1, wherein the sample conduit means includes a constant head unit (26) serving when the pressure of the sample liquid exceeds a predetermined value to provide a constant flow of sample liquid through the flow cell in the measuring mode.

3. Apparatus according to Claim 1 or Claim 2, wherein a T junction (46) is provided in the sample conduit means downstream of the flow selector with the T junction being connected to receive reference solution from the heat exchanger (42) the flow paths downstream of said T junction being identical in the respective modes for sample liquid and reference solution.

4. Apparatus according to Claims 2 and 3, wherein the constant head unit (26) is disposed in the sample conduit means downstream of the T junction.

5. Apparatus according to any of the preceding claim wherein the ion-selective electrode assembly comprises a pH electrode (12) and a reference electrode (14).

6. A method of monitoring the concentraion of a species of ion in a flowing sample liquid by passing the sample liquid through a flow cell (10) having an ion-selective electrode assembly (12, 14) in electrochemical contact with the sample liquid, characterised in that the electrode assembly is standardized by diverting sample liquid from the cell into heat exchanging relationship with an appropriate reference solution to equilibrate sample liquid and reference solution temperatures, and then passing the temperature-equilibrated reference solution through said flow cell for standardization of the electrode assembly.

7. A method according to Claim 6 of monitoring the pH levels in boiler feed water wherein the reference solution comprises pH buffer solution.

**Revendication**

1. Appareil pour la mesure par électrodes sélectives d'ions de la concentration d'un type d'ion dans un liquide échantillonné en circulation, comprenant une cellule à circulation (10), dans laquelle un ensemble d'électrodes à sélectivité ionique (12, 14) est monté de façon à être en contact électrochemique avec le liquide échantillonné qui circule à travers la cellule et un réservoir (36) de solution de référence, lequel appareil est caractérisé par des moyens comprenant un échangeur de chaleur (42), qui relie le réservoir (36) à la cellule à circulation (10), et des conduits d'échantillon (20, 48) pourvus d'un sélecteur d'écoulement (22) au moyen duquel le liquide échantilloné peut être dirigé dans une phase de mesure à travers la cellule à circulation (10) et dans une phase d'étalonnage à travers l'échangeur de chaleur (42), le passage de la solution de référence à travers l'échangeur de chaleur dans la phase d'étalonnage servant ainsi à équilibrer les températures du liquide échantillonné et de la solution de référence.

2. Appareil suivant la revendication 1, caractérisé en ce que les conduits d'échantillon comportent une unité à charge constante (26) qui agit, lorsque la pression du liquide échantillonné dépasse une valeur prédéterminée, pour établir un débit constant de liquide échantillonné à travers la cellule à circulation dans la phase de mesure.

3. Appareil suivant la revendication 1 ou 2, caractérisé en ce qu'un raccord en T (46) est prévu dans le conduit d'échantillon en aval du sélecteur d'écoulement, ce raccord en T étant branché pour recevoir la solution de référence venant de l'échangeur de chaleur (42), les circuits en aval de ce raccord en T étant les mêmes dans les phases respectives pour le liquide échantillonné et la solution de référence.

4. Appareil suivant les revendications 2 et 3, caractérisé en ce que l'unité à charge constante (26) est disposée dans le conduit d'échantillon en aval du raccard en T.

5. Appareil suivant l'une quelconque des revendications précédentes, caractérisé en ce que l'ensemble d'électrodes à sélectivité ionique comprend une électrode de pH (12) et une électrode de référence (14).

6. Procédé de contrôle de la concentration d'un type d'ion dans un liquide échantillonné en circulation par passage du liquide échantillonné à travers une cellule à circulation (10) comportant un ensemble d'électrodes à sélectivité ionique (12, 14) en contact électrochimique avec le liquide échantillonné, lequel procédé est caractérisé en ce que l'ensemble d'électrodes est étalonné par dérivation du liquide échantillonné de la cellule en relation d'échange de chaleur avec une solution de référence appropriée, pour équilibrer les températures du liquide échantillonné et de la solution de référence, puis par passage de la solution de référence à température équilibrée à travers la cellule à circulation, pour l'étalonnage de l'ensemble d'électrodes.

7. Procédé suivant la revendication 6, pour le contrôle des valeurs de pH d'une eau d'alimentation de chaudière, caractérisé en ce que la solution de référence est une solution tampon de pH.

**Patentansprüche**

1. Vorrichtung zur ionenselektiven Elektrodenmessung der Konzentration einer Ionenart in einer strömenden Probe eines Fluids, mit einer Strömungszelle (10), die eine ionenselektive Elektrodenanordnung (12, 14) für eine elektrochemische Berührung mit dem die Strömungszelle (10) durchströmenden Fluid aufweist, und mit einem eine Referenzlösung enthaltenden Speichergefäß (36), dadurch gekennzeichnet, daß das Speichergefäß (36) über eine Wärmetauscher (42) an die Strömungszelle (10) angeschlossen und das Fluid über eine mit einem Strömungswähler (22) versehene Fluidleitung (20, 48) wahlweise der Strömungszelle (10) für eine Messung oder dem Wärmetauscher (42) für eine Normung zugeleitet ist, wobei die Hindurchleitung der Referenzlösung durch den Wärmetauscher (42) während der Normung des Fluids dem Temperaturausgleich zwischen dem Fluid und der Referenzlösung dient.

2. Vorrichtung nach Anspruch 1, dadurch gekennzeichnet, daß in der Fluidleitung (20, 48) ein Konstantdruckgefäß (26) angeordnet ist, das beim Überschreiten eines vorbestimmten Druckes des Fluids während dessen Normung eine konstante Strömung des Fluids durch die Strömungszelle (10) sicherstellt.

3. Vorrichtung nach Anspruch 1 oder 2, dadurch gekennzeichnet, daß in der Fluidleitung (20, 48) stromabwärts von dem Strömungswähler (22) ein für die Zuleitung der Referenzlösung aus dem Wärmetauscher (42) vorgesehenes T-Verbindungsstück (46) angeordnet ist, stromabwärts von welchem die Strömungswege für das Fluid und für die Referenzlösung während der Messung und während der Normung des Fluids identisch sind.

4. Vorrichtung nach den Ansprüchen 2 und 3, dadurch gekennzeichnet, daß das Konstantdruckgefäß (26) in der Fluidleitung (20, 48) stromabwärts von dem T-Verbindungsstück (46) angeordnet ist.

5. Vorrichtung nach einem der Ansprüche 1 bis 4, dadurch gekennzeichnet, daß die ionenselektive Elektrodenanordnung eine pH-Elektrode (12) und eine Referenzelektrode (14) umfaßt.

6. Verfahren zur Überwachung der Konzentration einer Ionenart in einer strömenden Probe eines Fluids, bei dem das Fluid durch eine Strömungszelle (10) hindurchgeströmt wird, die eine mit dem Fluid in einer elektrochemischen Berührung gehaltene ionenselektive Elektrodenanordnung (12, 14) aufweist, dadurch gekennzeichnet, daß die Elektrodenanordnung durch eine Ableitung des Fluids von der Strömungszelle für einen Wärmeaustausch mit einer geeigneten Referenzlösung zum Temperaturausgleich zwischen dem Fluid und der Referenzlösung genormt und daß dann die in der Temperatur ausgeglichene Referenzlösung durch die Strömungszelle für eine Normung der Elektrodenanordnung hindurchgeströmt wird.

7. Verfahren nach Anspruch 6, dadurch gekennzeichnet, daß für die Überwachung das pH-Werte des Spiesewassers für Boiler als Referenzlösung eine pH-Pufferlösung verwendet wird.

0 007 733